# EUROPEAN PATENT SPECIFICATION

(11) **EP 1 367 903 B1**
(45) Date of publication and mention of the grant of the patent: **16.02.2005**
(21) Application number: 02709621.3
(22) Date of filing: 21.02.2002
(51) Int. Cl.: A23G 3/10, A23G 3/00

(54) **COTTON CANDY PACKAGING SYSTEM AND RELATED PRODUCT**
PACKSYSTEM FÜR ZUCKERWATTE UND VERWANDTE PRODUKTE
SYSTEME DE CONDITIONNEMENT DE BARBE A PAPA ET PRODUIT CORRESPONDANT

(30) Priority: 07.03.2001 US 800792
(43) Date of publication of application: 10.12.2003
(60) Divisional application: 04078303.7
(73) Proprietor: Gold Medal Products Co., Inc., Cincinnati, OH 45241-4807 (US)
(72) Inventor: EVANS, John, C., Mason, OH 45040-7034 (US)
(74) Representative: Findlay, Alice Rosemary
(86) International application number: PCT/US2002/005122
(87) International publication number: WO 2002/071859

(56) References cited:
- WO-A-99/16683
- DE-U- 29 916 485
- FR-A- 2 784 963
- US-A- 3 615 671
- US-A- 5 511 961
- DATABASE WPI Section PQ, Week 199851 Derwent Publications Ltd., London, GB; Class Q31, AN 1998-608110 XP002215736 -& RU 2 111 908 C (SHAPOSHNIKOV V G), 27 May 1998 (1998-05-27)
- PATENT ABSTRACTS OF JAPAN vol. 2000, no. 12, 3 January 2001 (2001-01-03) -& JP 2000 253822 A (OTA CHIKAO), 19 September 2000 (2000-09-19)

## Description

### Field of the Invention

This invention relates generally to cotton candy and more particularly to an improved marketing and packaging system and product for presenting and selling cotton candy to a customer.

### Background of the Invention

Cotton candy or candy floss is a favorite treat of many children and adults. Machines for turning granular sugar into sugar filaments or "cotton candy" are generally known and have been employed for some time in concession stands at various events, such as festivals, fairs, circuses, and sporting events. Generally, to make cotton candy, a cotton candy machine heats sugar granules into molten sugar and then casts or spins the molten sugar into long, delicate fibers or strands using centrifugal force. The delicate candy fibers or strands are then directed into a collection basket where they cool and are gathered for sale and consumption.

Traditionally, cotton candy would be made fresh at the point of sale of the product, such as at an event. That is, cotton candy would be spun shortly before being sold to a consumer. After the molten sugar was spun or slung out of the spinner head of the machine, it would cool and solidify into delicate sugar strands and adhere to the inside of the collection basket. An operator or salesperson would then roll an end of a paper tube or stick around the basket and collect the delicate cotton candy strands into a large fluffy wad on the end of a conical tube. The finished product would then be sold and delivered directly to a customer, and would be torn or bitten from the tube and consumed, generally immediately.

While cotton candy has traditionally been made and sold fresh to the consumer, and in the past has primarily been associated with concession sales at periodic or seasonal events, such as fairs, circuses, and sporting events, the market for cotton candy and cotton candy products has evolved. One factor driving such evolution is that cotton candy consumers want to enjoy the treat year around. The desire and demand for cotton candy has therefore extended beyond the concessions at a seasonal or periodic event. As a result, cotton candy is now often made and sold all year at various indoor facilities, such as malls, candy stores, and other facilities where food concessions are offered.

At such facilities, as with seasonal concessions, cotton candy is still often made at the point of sale and delivered fresh to a consumer for immediate consumption. Such sales of cotton candy generally require that one person make the cotton candy while another person takes the customer's money and delivers the product to the customer. As a result, the traditional cotton candy sales process, although producing fresh cotton candy, is labor intensive, time consuming, and extremely inefficient.

Furthermore, traditional sales of cotton candy have required that the consumer come to the location where the cotton candy is made so that it can be delivered fresh at the point of sale. Therefore, traditional sales and distribution methods for cotton candy have been somewhat inconvenient for the consumer, and have limited the volume of consumers to which the product is exposed.

More recently, the sale of cotton candy has expanded beyond the traditional method of making the cotton candy fresh right at the point of sale and there is now a significant desire for pre-made cotton candy products which are shipped to and sold in various locations. The desire to expand sales volume and market cotton candy all year to consumers in non-traditional cotton candy venues, such as super markets, convenience stores, and other such facilities, has driven the increased demand for pre-made cotton candy. As a result, cotton candy is now often pre-made in a remote facility, packaged, and then shipped or delivered to another facility which is the point of sale. A typical sales facility, for example, would be a concession vendor at a festival or sporting event, or a super market.

Since pre-made cotton candy is usually shipped and sold in a location other than where it is made, it became necessary to package the cotton candy. As noted, when sold freshly made, cotton candy would usually just be placed on a paper stick or cone. The current prior art methodology of packaging and marketing pre-made cotton candy has been to place and sell the product in a thin plastic bag. For example, thin polypropylene bags having 0.001 to 0.002 inch (0.0254 to 0.0508 mm) thickness are used. Cotton candy is made at the remote facility and placed in the plastic bag which is then closed in an appropriate fashion, such as with a twist tie or a plastic clip. The bags of cotton candy are then shipped to the point of sale and are marketed and displayed, usually on vertical display trees or racks which hold a number of the bags.

While such prior art methods of packaging and marketing cotton candy have addressed the desire to distribute cotton candy in a greater number of locations and to a greater number of consumers, it has also created other issues which are not adequately addressed by the prior art.

One primary concern, which is not adequately addressed by the prior art, is the freshness and condition of the pre-made cotton candy product at the time of the sale and at the time that it is consumed. As may be appreciated, cotton candy is fragile and therefore particularly susceptible to damage and degradation from conditions in the manufacturing, packing, shipping, and sales environment. In the past, when cotton candy was made fresh at the point of sale, freshness or its condition were not a particular concern. It was spun, collected, and eaten more or less within a very short time period from a few minutes to an hour or so. However, when pre-making and pre-packaging cotton candy for later sale, the freshness and condition of the cotton candy must be protected and maintained prior to the sale. This can be many hours or many days.

The prior art plastic bags which are used to hold the candy are significantly gas permeable, are not completely sealed by the twist ties and clips, and are compressible. Therefore, the inside environment of the bag is not airtight or moisture proof and the cotton candy product is significantly exposed to damage and to the ambient atmosphere and the humidity and moisture in the atmosphere. As a result, prior art cotton candy products degrade and have a very limited shelf-life before they must be sold and consumed. The cotton candy wad can also be mashed, due to rough handling.

More specifically, cotton candy sold and marketed according to the prior art absorbs the ambient moisture or humidity which passes into the bag, through the bag wall or through the tie-wrapped opening. Upon absorbing the moisture, the cotton candy "wilts" or melts. Moisture which contacts cotton candy tends to degrade it to a syrup or gooey form, therefore reducing or eliminating its fluffiness. That is, it simply. becomes liquid sugar, rather than fluffy cotton candy. As may be appreciated, the gooey configuration is unappealing to the customer and certainly is not attractive on a sales display. As a result, a bag with evidence of sticky sugar or melted cotton candy is not going to sell.

Degraded cotton candy products do not sell well, and therefore must be replaced on a frequent basis. Prior art pre-made cotton candy has a very short shelf-life. The retailer will generally return the degraded product to the cotton candy wholesaler or manufacturer for refund, or ask that it be removed and replaced with new product. This presents a substantial economic loss to the cotton candy maker, the wholesaler and possibly the retailer, as well. Degraded product which is not suitable for sale is usually then thrown away.

In the prior art, typical shelf-life for pre-made cotton candy might be only 2-3 days. However, in humid climates or atmospheres, the shelf-life of cotton candy may be as short as 1 day.

Cotton candy manufacturers and retailers have had no choice but to address and accommodate the short shelf life of cotton candy. As a result, a retailer may only have or want enough product supply for a typical 1 or 2 day sales volume, and may run short of product. This results in lost sales. The cotton candy product certainly cannot be successfully warehoused or inventoried. Therefore, cotton candy requires constant shelf and inventory maintenance by the manufacturer, wholesaler, retailer, or all three. As a result, prior art cotton candy packaging and marketing methodologies present the risks of significant losses to the cotton candy manufacturer and reduced sales due to product degredation and waste, and also presents costs associated with frequent attention required for the displayed inventory, and frustration for the retailer.

Furthermore, the prior art limits the markets in which cotton candy may be sold. If the distribution and sales process is longer than three days or so, cotton candy is generally not suitable for that market. Large volume retailers, such as K-Mart® and Wal-Mart®, usually will not want to handle a product which is so fragile and requires constant maintenance and protection, and then must be sold in a day or two.

An additional drawback in prior art methodologies for pre-made cotton candy is that the product is difficult to display. Generally, the bags are hung from a vertically-extending tree or rack, and are pulled from the tree when purchased. Such trees are often difficult to stock. Furthermore, it is sometimes difficult for the customer to remove the cotton candy from the tree, and the unstable trees are susceptible to falling over when a bag is pulled therefrom. A falling tree or rack creates a mess and may also be dangerous. Therefore, prior art cotton candy packaging and marketing methodologies are not desirable either from the consumer standpoint or the standpoint of the parties who must make and sell the product.

Still another drawback presented by the prior art is the fragility of the product when it is shipped and displayed. Like a loaf of bread, cotton candy packaged in a plastic bag is susceptible to being smashed. The plastic bag is flimsy and does not hold a form. Cotton candy is predominantly air, so when it is significantly smashed or damaged, and has lost its fluffiness, it is generally not suitable for sale.

Freshness and fluffiness are characteristics which consumers particularly desire for cotton candy. Therefore, such drawbacks in the prior art packaging and marketing methodology are significant.

Accordingly, it is an objective of the present invention to address the drawbacks associated with current methodologies of packaging and marketing cotton candy.

Particularly, it is another objective of the present invention to reduce degradation and maintain the freshness of the cotton candy product, and thereby increase its shelf life.

It is another objective to expand the market for cotton candy products.

It is another object of the invention to prevent the cotton candy from losing its fluffiness or wilting to a granular sugar form.

It is still another objective of the present invention to prevent cotton candy from being damaged or degraded during shipment and display.

It is still a further objective of the present invention to provide a more desirable display method for cotton candy.

RU 2111908 describes a method for packaging articles such as spun sugar. The method involves locating a first hemispheric thermoplastic package blank on a circular table, positioning a batch of spun sugar in the blank, locating a needle air duct above the blank and then covering the spun sugar and needle air duct with a second hemispheric thermoplastic package blank which is held down by a circular cover. The two hemispheric thermoplastic package blanks are then joined except at the location of the needle air duct. Air is then fed through the needle air duct to create an excess pressure within the joined blanks. Finally the needle air duct is withdrawn and the gap at which it was located is closed by soldering.

### Summary of the Invention

The present invention in one aspect provides a method of marketing and selling cotton candy comprising forming a fluffy wad of cotton candy, positioning the fluffy wad of cotton candy in a rigid, self-supporting container and sealing the container around the wad of cotton candy, the container inhibiting moisture contact with the cotton candy, characterised in that the container is a rigid, self-supporting container, and in that the sealed rigid container defines a static volume which surrounds the cotton candy wad and protects the wad from being easily compressed and damaged.

The present invention in another aspect provides a food product comprising a fluffy wad of cotton candy, a container enclosing the wad of cotton candy within a sealed volume, the container reducing moisture contact with the cotton candy to maintain the freshness of the cotton candy wad, characterised in that the container is a rigid, self-supporting container, and in that the container defines a significantly gas impermeable sealed volume which surrounds the cotton candy wad and the container protects the wad.

The inventive method, described herein, of packaging, marketing and selling of cotton candy, and the resulting food product associated therewith, at least in the preferred embodiments provides significant advantages to cotton candy manufacturers and retailers by maintaining the freshness and fluffiness of the product, by reducing moisture degradation, and by increasing the shelf life of the cotton candy to thereby reduce economic losses associated with damaged product which must be removed, discarded, and replaced. The costs of frequently maintaining an inventory and shelf product with a very short life span are also reduced. Substantial new markets for cotton candy products are created by the invention. The invention further provides benefits in shipping and displaying the cotton candy product.

The invention comprises forming cotton candy from molten sugar to form a fluffy wad of cotton candy. The fluffy wad of cotton candy is positioned within a rigid container body, preferably by passage through an opening in the container body, such as in the top of the container body. One suitable embodiment of the invention utilizes a generally cylindrical or slightly tapered container body, generally having the shape of a cup. The rigid container body is significantly gas impermeable and defines a static volume in which the cotton candy wad is placed and in which the candy is protected from being easily compressed and from absorbing sufficient amounts of moisture such that it degrades.

In accordance with another preferred feature of the present invention, the rigid container body opening is sealed, such as with a lid, in a significantly airtight fashion to form the closed container. The closed container defines a significantly gas impermeable enclosure surrounding the wad of cotton candy to reduce outside ambient moisture contact with the cotton candy and to maintain the freshness of the cotton candy. The wad of cotton candy is then presented in the rigid container for sale and consumption by a consumer.

In one embodiment, the container has a significant gas impermeability characteristic which results in less than 0.3 grams of moisture per 100 square inches (645.16 cm²) of container area at 73° Fahrenheit (22.78°C) for 365 days at ambient pressures. One suitable container embodiment which has sufficient rigidity and significant gas impermeability is a container formed of polypropylene having a wall thickness in the range of 0.007 to 0.015 inches (0.178 to 0.381 mm), and more preferably, a wall thickness of 0.011 inches (0.280 mm).

The inventor has discovered that the preferred methodology and food product provides a significantly gas impermeable, non-crushable environment for the cotton candy such that it yields an effective shelf-life for the cotton candy product of at least two weeks, generally over one month, and preferably at least two months. In the prior art, the average shelf life for cotton candy marketed according to the prior art is approximately only 2-3 days or less. The methodology thereby opens up a significantly larger market for cotton candy products by reducing the frequency of product and shelf maintenance, and by providing a larger window for sale or consumption of the cotton candy product before it must be discarded and replaced with new, fresher cotton candy. As a result, the methodology provides significant economic benefits not realized in the prior art.

In accordance with another embodiment of the present invention, the container is sufficiently rigid to stackably support another container without compression of the cotton candy in any of the containers. In that way, a plurality of containers filled with cotton candy may be stacked and placed in a shipping structure or on a display shelf. The rigid container provides the wholesaler and retailer with a product which may be easily shipped, stored, and handled without damage to the delicate cotton candy. In one embodiment of the invention, the container has a flat bottom and therefore may be stacked on a flat display shelf along with other traditional food items. The present invention therefore eliminates the need for an awkward and cumbersome display tree or rack for displaying the cotton candy product. The product is easy to remove and re-stock on a shelf. Special delicate handling of the product is also no longer necessary.

In accordance with another embodiment of the invention, the rigid container is formed of a suitable plastic or other synthetic material, such as polypropylene, and comprises a cylindrical container body with a lid which forms a snap seal with the body to seal it. The snap seal is airtight and generally waterproof. Such material is lightweight and relatively inexpensive and provides the desired generally gas impermeable and rigid volume for containing the wad of cotton candy. Furthermore, the container also provides a generally water-proof static volume for further protecting the cotton candy wad from damage from liquid in addition to the environmental moisture and humidity damage protection provided by the significantly gas impermeable qualities of the container.

Preferably, the container is transparent so that the cotton candy product may be seen to provide a visual incentive for purchase of the cotton candy. Furthermore, graphics are placed on the container to convey information about the cotton candy wad, and other desirable information, such as one or more trademarks.

Further advantages and features of the invention will become more readily apparent in the description of the invention given below.

### Brief Description of the Figures

The accompanying drawings, which are incorporated in and constitute a part of this specification, illustrate embodiments of the invention and, together with a general description of the invention given below, serve to explain the principles of the invention.
Figure 1A is a perspective view of a fluffy wad of cotton candy.
Figure 1B is a perspective view of a container of cotton candy for packaging and marketing the cotton candy in accordance with the invention.
Figure 2 is a side, cross-sectional view of a shipping container of cotton candy product in accordance with one aspect of the invention.
Figure 3 is a front view of a display shelf of cotton candy product in accordance with another aspect of the present invention.
Figure 4 is a partial cross-sectional view of a container as illustrated in Figure 1 B in accordance with an aspect of the present invention.

### Detailed Description of the Invention

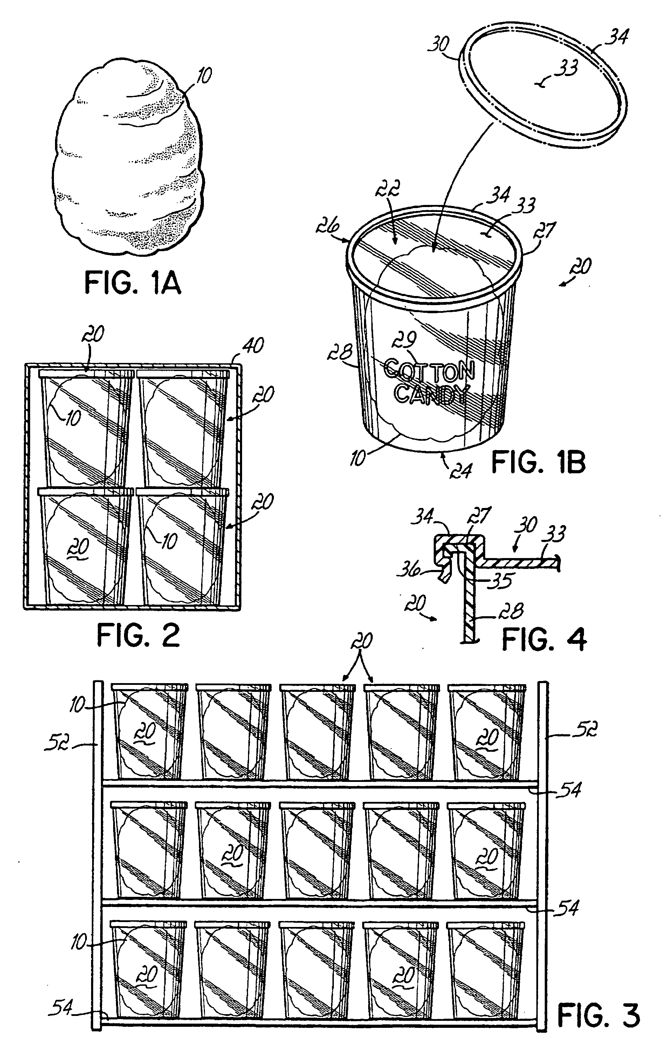

Referring to Figure 1A, a perspective view is shown of a fluffywad of cotton candy. As noted above, a wad of cotton candy 10 is essentially a mass of delicate and fine spun molten sugar strands which have been collected together to form a wad. As such, prior art packages of pre-made cotton candy have required delicate handling to prevent damage or degradation of the cotton candy. Various machines and methods for making cotton candy are disclosed in various U.S. Patents, such as Nos. 3,036,532; 5,145,687; 5,441,754; 5,498,144; and 4,872,821.

The fluffy wad 10 of cotton candy is predominantly air surrounded by the spun strands of molten sugar which have solidified. Therefore, the wad 10 forms a very fragile volume of cotton candy. The lightness or fluffiness of the cotton candy gives it its visual and taste appeal to consumers. Generally, a consumer would tear away a chunk of the fluffy wad to eat it, or may simply bite into the fluffy wad. Once in the mouth of the consumer, the fluffy wad of cotton candy melts into a sweet, granular or liquid sugar form.

As noted above, the fluffy wad 10 of cotton candy may be damaged by being smashed or otherwise compressed so that it loses its fluffiness, or may revert to the wilted or gooey sugar form when exposed to atmospheric or other moisture. In the damaged or wilted form, the cotton candy loses its visual appeal and therefore will not sell, resulting in economic loss. With current marketing methodologies wherein the cotton candy is packaged, shipped, displayed, sold, and otherwise handled in a flimsy plastic bag, the fluffy wad 10 is constantly exposed to such possible damage and degradation. Furthermore, the freshness of the cotton candy product is generally lost shortly after it is made and displayed for sale, such that the shelf life is very short using prior art methods. The below described methodology of marketing and selling cotton candy addresses these drawbacks and other drawbacks in the prior art, as noted above, and is directed primarily to the packaging and marketing of pre-made cotton candy which is made at a remote location and sold at various different retail locations. With pre-made and shipped cotton candy, freshness and product condition is of particular concern. Of course, the method is also suitable for use with fresh concession cotton candy, as well.

In the inventive methodology, the cotton candy may be formed from molten sugar to form the fluffy wad 10 shown in Figure 1A, according to various known methods. In the past, such a fresh wad has generally been placed or wound onto the end of an elongated paper cone or stick for supporting the wad. Alternatively, as pre-made cotton candy, it was placed in a flimsy plastic bag.

In the method, the fluffy wad 10 of cotton candy is positioned within a rigid container body 20 through an opening 22 in the container body. In one embodiment of the invention, the rigid container body 20 comprises a bottom 24, a top 26 where the opening 22 is formed, and a generally vertical side wall 28 therebetween. The embodiment of the container body illustrated in the Figures is generally cylindrical in shape and forms a cup shape; however, other shapes might also be utilized for container 20. In the embodiment illustrated, for purposes of stacking the container, the body 20 actually tapers inwardly from top to bottom, similar to a truncated cone, but will be designated as generally cylindrical.

Container body 20 is referred to herein as a "rigid" container body, and is preferably formed of a suitable moldable synthetic or plastic material, such as polypropylene. The rigidity of container body 20 is relative, and the container body is significantly rigid relative to the non-rigidity or flimsiness of a plastic bag which is utilized in the prior art for packaging and marketing pre-made cotton candy. The container body 20 is rigid enough to define a generally static volume within and hold its shape and generally prevent the fluffy wad 10 from being easily compressed or smashed. Particularly, the container body 20 is sufficiently rigid to hold its shape and withstand greater pressures thereon than would a flimsy prior art plastic bag. While polypropylene is one suitable plastic material for forming rigid container body 20, other plastics and suitable materials might also be utilized to mold container body 20. A container formed of polypropylene of a particular construction has been found to be suitably rigid, and to provide a significantly gas impermeable environment for the cotton candy, as discussed below.

As will be readily understood, container body 20 might be crushed if a sufficient amount of weight or force is applied thereto, and the purpose of the rigidity of container body 20 is not to withstand all possible forces, but rather to keep a defined shape to protect the fragile cotton candy and to provide greater protection than prior art methodologies, particularly in the normally expected circumstances of packing, shipping, displaying, and selling this product.

Another consideration in packaging and marketing cotton candy is the weight and cost of the container. Since cotton candy is light and fluffy, and therefore the weight of the wad 10 will not, itself, provide significant forces or stresses on container body 20, a rigid yet lightweight container is preferably used in accordance with the invention. Furthermore, since the marketing of the cotton candy and its profitability take into account the cost of the container, the container should be relatively inexpensive. The container described herein, and used according to the invention, meets that criteria. Furthermore, the savings of cotton candy product provided by the maintained freshness and the increased shelf life of the inventive methodology justifies any increased cost of a container body 20 over the cost of a typical prior art plastic bag. As discussed further hereinbelow, in one embodiment of the present invention, the containers are configured to be stacked (Figure 2). Therefore, the rigidity of container body 20 is preferably sufficient to withstand the stacking of multiple containers, one on the other, without compression and damage of the cotton candy products therein.

Container body 20 is preferably transparent so that the cotton candy may be seen when the container is sealed and displayed. Cotton candy is often sold as an impulse product, and thus the visual stimulation provided by sight of the cotton candy provides a significant sales incentive to a customer. Clear plastic bags, as utilized in the prior art, have maximized that sales incentive, and the methodology of the present invention utilizes a container body 20 which maintains a similar sales incentive by showing the cotton candy wad 10 through the walls 28, bottom 24, and top 26 of the container body 20. Referring to Figure 1B, the transparent container may include graphics 29 thereon, such as for showing the ingredients or other aspects of the product, such as a trademark indicating the brand of cotton candy.

However, a significant improvement provided by the present invention is that it drastically improves the freshness, condition and marketability of the cotton candy product over prior art methodologies. Furthermore, because of the increased duration at which freshness is maintained, new markets for cotton candy are created.

In accordance with another preferred feature of the present invention, the rigid container body 20 is significantly gas impermeable and surrounds the cotton candy wad. The container body is sealed in a significantly airtight fashion to form a closed container which defines a significantly gas impermeable container with static internal volume to reduce ambient moisture (as with humidity) contact with the cotton candy and maintain its freshness. As noted above, environmental moisture or humidity will wilt or melt cotton candy and thus degrade its condition and destroy its freshness and sales appeal. In the prior art, the cotton candy is exposed to such moisture and damage because prior art flimsy plastic bags breathe and allow environmental humidity to contact the cotton candy. Furthermore, the bags are loosely sealed with twist ties or clips which are not sufficient to form an airtight seal.

The term "significantly gas impermeable" as used herein to describe this preferred feature of the invention is a relative term with relation to the prior art. That is, the invention preferably utilizes a container, which is significantly gas impermeable with respect to the gas permeable or breathable nature of flimsy prior art plastic bags. Therefore, the container might not be absolutely gas impermeable. Given sufficient time and pressure, the container may allow moisture from the environment to pass therethrough. However, the inventor has found that the significantly gas impermeable nature of the preferred container, as described, will maintain the freshness of the cotton candy and prevent moisture damage for a significantly longer time than the prior art. As noted below, the container has increased the shelf life of a pre-made cotton candy product drastically from 1 to 2 days, typically, to over two weeks, and usually around 1 to 2 months and longer. This not only significantly reduces economic losses to the cotton candy wholesaler and retailer, but ensures a tastier, fresher product and opens new markets, and significantly larger markets, for cotton candy products.

In one embodiment of the invention, the container has a significant gas impermeability which results in less than 0.3 grams of moisture exposure for the cotton candy per 100 sq. in. (645.16 cm²) of container area at an ambient temperature of 73° Fahrenheit (22.78°C) over a time period of 365 days. To achieve such gas impermeability, one embodiment of the container is formed of polypropylene having a wall thickness in the range of 0.007 to 0.015 inches (0.178 to 0.381 mm). In one specific embodiment, the container has a wall thickness of approximately 0.011 inches (0.280 mm). The container body, and the opening therein through which the cotton candy is placed in the container, is sealed in a generally airtight fashion to form a closed container with the significant gas impermeable qualities of the invention. In one embodiment, a lid is utilized and forms a significantly gas impermeable seal with the container body. For example, the seal could be a snap seal which is formed by the lid with the container body. In another example, the seal could be a tamper-proof seal.

As illustrated in Figure 4, the lid 30 comprises a flat upper surface 33 and a raised rib 34. The rib 34 defines a channel which receives the upper lip 27 of the container when the container body 20 is sealed with the lid 30. Figure 4 shows a cross-sectional view of one suitable snap seal structure wherein the side wall 28 of the container, at the top thereof, forms lip 27 which is engaged by the rib 34 to fit in a trough or channel created thereby. The rib is flexible and resilient and snaps over the lip 27 to form the snap seal. The contact between the upper surface of the lip 27 and the surface 35 of the channel formed by rib 34 provides a seal in an airtight and significantly gas impermeable fashion for protecting the freshness of the cotton candy wad in accordance with the principles of the present invention. The seal and overall container are further significantly liquid-tight. An indentation 36 may be formed on lid 30 so that the lid may be snapped onto lip 27 of the container 20 for holding the two lip and lid surfaces together in a significantly gas impermeable and liquid-tight seal, as well.

As noted above, the freshness, and therefore, shelf life, of cotton candy marketed in prior art breathable or leaky plastic bags, is generally limited to approximately 1-3 days. Sometimes, it may be as short as 1 day for particularly humid environments. Therefore, prior art cotton candy must be sold or replaced at that short interval, with the degraded and unsold product usually being thrown away or discarded. The short shelf life presents a significant economic loss to the cotton candy maker and/or the retailer. It limits sales, because retailers will only want to display what they can sell. It also increases the cotton candy maker and or wholesaler's cost by requiring relatively frequent maintenance of the shelf inventory of pre-made cotton candy. As such, in the prior art, cotton candy products have had to be sold relatively quickly for rapid inventory turnover in order to present the desirable freshness and quality and avoid product loss and the negative economic effects thereof .

The inventor has discovered that by utilizing the preferred unique inventive methodology for packaging, marketing, and selling cotton candy, significant cost savings will result. The cotton candy marketed according to the methodology maintains its freshness for over two weeks and usually over one month, and usually over two months. Therefore, the cotton candy product marketed and sold according to the methodology has a shelf life within a supermarket which is over two weeks and usually around 1 to 2 months. This significantly reduces product loss and economic loss attributable to degraded and unsold product which must be removed and discarded. Furthermore, it reduces the frequent, periodic maintenance associated with a product which has a 1-3 day shelf life, resulting in further cost savings. The generally gas impermeable feature provided by the methodology also keeps the cotton candy fresher and thus enhances the quality of the product along with improving its taste and ultimately its saleability.

A further benefit of the preferred inventive methodology is that it essentially creates new channels of trade and opens entirely new markets in which cotton candy products might be sold, and therefore increases the sales volume and profitability of the cotton candy maker. More specifically, cotton candy which is marketed and sold utilizing the preferred inventive methodology may be sold in venues which require a significantly longer shelf-life than 1-3 days, or even a week. For example in large retailers, such as K-Mart® or Wal-Mart®, the products will be in the distribution chain, and then ultimately on the shelf, significantly longer than the typical 1-3 day time period corresponding to the shelf-life of prior art cotton candy products. Furthermore, in such sales venues, the product will often have to be stored and inventoried. Prior art cotton candy products cannot be inventoried or stored for any significant length of time and therefore have not been particularly suitable for such sales channels or venues. With the preferred methodology, cotton candy may now be offered to a greater number of consumers through such sales venues without significant concern for the degradation or ultimate freshness of the product, and without concern for the transit time to deliver the product to the shelf, or for the actual time that the product is inventoried or remains on the shelf before being sold and consumed. Therefore, the preferred inventive methodology provides significant benefits to cotton candy makers to assist in presenting their product to market, and actually increases sales by opening up and defining new markets for the sale of the cotton candy products. The methodology also improves the overall profitability of the enterprise by reducing the costs associated with discarded product and frequent inventory maintenance.

In accordance with another preferred feature of the present invention, the inventive rigid container also provides a significantly liquid-tight containment for the wad of cotton candy. This protects the cotton candy wad from damage from moisture and water or other liquid, in addition to any moisture from the air, which may be encountered when the product is warehoused or otherwise stored. In accordance with another preferred feature of the present invention, cotton candy is presented to a consumer within a significantly rigid container for direct consumption from the container. The container is configured to stackably engage another container. More specifically, the lid 30 is configured to stackably engage a bottom of another similar rigid container body, and the container is sufficiently rigid to stackably support another container without compressing the cotton candy therein. Referring to Figure 2, the plurality of stacked containers may then be placed in a rectangular shipping structure 40, such as a box, for shipment. The rigid container protects the fragile cotton candy wad 10, and prevents it from being smashed or otherwise damaged due to the weight of the other product stacked above each wad. This further increases the profitability of the cotton candy maker.

Generally, in the prior art, if the flimsy bags of cotton candy were stacked, the lowermost bags are smashed by the weight of the uppermost bags of product. That is, a wad of cotton candy would be smashed or compressed by any other wad of cotton candy or other item placed on top of it. Compression damage, which reduces the desirable fluffiness of the cotton candy, may make the product difficult or impossible to sell. Prior art marketing and sales of pre-made cotton candy, including shipment of the cotton candy product, is not particularly efficient since special shipping procedures are necessary to prevent the fragile cotton candy from being smashed or otherwise damaged. Such inefficiencies and the special handling required by the prior art increase the overall cost of marketing the product. The present invention allows for shipping of cotton candy product in a manner similar to the way other products are shipped, such as on pallets of stacked containers, wherein individual cotton candy wads are stacked on other wads in their respective rigid containers.

The container 20 is preferably tapered from top to bottom in one embodiment, as illustrated in the Figures. The bottom 24 of the container is not as wide as the top 26 and is received by surface 33 on lid 30 of a lower container (see Figures 2 and 3). The bottom 24 is contained by the rib 34 from sliding off of the lid 30, and the lid 30 thereby stackably engages the bottom of another container.

In accordance with another preferred feature of the present invention, the lid 30 of the container is configured to form a snap seal and is resealable. That is, the lid may be unsealed to unseal the container for access to the cotton candy, and then replaced and resealed to again cover the opening 22 of the container in a significantly gas impermeable and airtight fashion. Referring to Figure 1B, a lid might be removed and unsealed from the container, simply by pulling it from the container. The flexibility of the lid, which would usually be made of the same material as the container, will allow the indent 36 to be pulled away such that the edge of the lid 30 may be unsnapped and removed from the lip 27 of the container. The resiliency of the lid material, such as polypropylene, will allow it to be snapped again onto the top of the container in significantly airtight and moisture-tight fashion. In that way, the container may be readily sealed if all the cotton candy is not consumed immediately. The container will then continue to function to protect and maintain the freshness of the cotton candy wad.

The preferred inventive methodology provides for easier display and maintenance of the cotton candy product on a store shelf. As noted above, prior art pre-made cotton candy products in flimsy bags were generally hung from a vertical display tree, rack, or other stand. The cotton candy displayed in such a way is difficult to remove from the tree, is subject to significantly more damage while on the tree, is difficult to restock, and presents a hazard because the unstable tree might be knocked over by a customer, including a child, either accidentally, or when trying to pull the product from the tree. The container according to the preferred method of the present invention, however, includes a generally flat bottom 24 so that containers full of cotton candy may be stacked generally on a flat display shelf, as illustrated in Figure 3. Shelf 50 is similar to various traditional store shelves, or other shelves, which are used to display and sell product. Such shelves generally include vertical support elements 52 with horizontal shelf elements 54 spanning therebetween. Alternatively, the shelf element 54 might be suspended from a back wall (not shown) of the unit 50. Utilizing the preferred methodology of the present invention, the cotton candy may be displayed readily on a shelf. Furthermore, it may be readily removed by a customer, and just as readily replaced by a stock person. Still further, as noted in Figure 2 with respect to shipment of cotton candy according to the preferred inventive methodology, the container 20 may be stacked two or more containers high, as illustrated in the lower part of the shelf unit 50 shown in Figure 3. Thus, the lid of the container which is configured to stackably engage a bottom of another rigid container provides an additional benefit in the display portion of the preferred marketing and sales methodology of the present invention. The invention further eliminates the need for clumsy and unstable display trees.

The present invention in its preferred embodiments lends itself to an assembly line or mass production of cotton candy for resale at locations removed from the manufacturing facility and also at a time significantly after the cotton candy is manufactured, as compared to traditional point of sale methods and prior art pre-made cotton candy sales methods. The preferred inventive methodology, and food products resulting therefrom, presents a more efficient and cost effective way for marketing cotton candy. The methodology reduces product loss, inventory maintenance, and labor requirements, and thereby increases profitability. The freshness and lack of degradation of the product increases sales. Shipping, display, and overall handling of the cotton candy is more efficient and less damaging to the product. The methodology enhances the market for cotton candy in supermarkets and convenience stores, and makes cotton candy a viable product for large retailers, which channels of trade are very desirable for large volume sales. The methodology also provides the same benefits for sales of cotton candy in traditional concession venues.

Finally, it will be appreciated that the methodology effectively separates the cotton candy spinning operation from the point of sale and consumption activities, significantly extending the time therebetween, without product degradation, and thus extends the product to previously unexploited markets.

While the present invention has been illustrated by the description of the embodiments thereof, and while the embodiments have been described in considerable detail, additional advantages and modifications will readily appear to those skilled in the art.

## Claims

1. A method of packaging cotton candy comprising forming a fluffy wad (10) of cotton candy, positioning the fluffy wad of cotton candy in a container (20, 30) and sealing the container (20, 30) around the wad (10) of cotton candy, the container (20, 30) inhibiting moisture contact with the cotton candy, **characterised in that** the container is a rigid, self-supporting container (20, 30), and **in that** the sealed rigid container (20, 30) defines a static volume which surrounds the cotton candy wad (10) and protects the wad from being easily compressed and damaged.

2. The method of Claim 1 wherein the container includes a body (20) with an opening (22), the fluffy wad (10) of cotton candy is in the positioned container body (20) through the opening (22) and the container body opening (22) is sealed to form the seal container (20, 30), and wherein the method further comprises presenting the wad (10) of cotton candy in the container (20, 30) for direct consumption by a consumer from the container.

3. The method of Claim 2 further comprising the step of sealing the container body opening (22) with a lid (30), providing a significantly gas impermeable seal with the container body (20).

4. The method of Claim 2 further comprising the step of sealing the container body opening (22) with a lid (30), the lid forming a snap seal with the container body (20).

5. The method of either Claim 3 or Claim 4 wherein the lid (30) is configured to stackably engage a bottom of another rigid container and including the step of stacking one of the containers on another.

6. The method of Claim 2 wherein the sealing step includes applying a reclosable closure (30) to the opening (22).

7. The method of any preceding claim including the step of positioning the wad of cotton candy in a container (20, 30) which is sufficiently rigid to stackably support another container without compression of the cotton candy wad (10) therein.

8. The method of any preceding claim including using a container (20, 30) made of a plastic material.

9. The method of any preceding claim, including the step of using a container (20, 30) of polypropylene having a wall thickness in the range of 0.007 to 0.015 inches (0.178 to 0.381 mm).

10. The method of Claim 9 including using a container (20, 30) having a wall thickness of approximately 0.011 inches (0.280mm).

11. The method of any preceding claim including using a container (20, 30) which is at least partially transparent so the cotton candy may be seen inside the container.

12. The method of any preceding claim including using a container (20, 30) having a generally cylindrical shape.

13. The method of any preceding claim including positioning the wad in a container having a generally flat bottom (24).

14. The method of any preceding claim further comprising placing graphics (29) on the container to convey information about the cotton candy wad (10).

15. The method of any preceding claim including using a container (20, 30) which maintains the cotton candy wad (10) from moisture sufficient to degrade the cotton candy for a period of at least two weeks.

16. The method of any preceding claim including using a container (20, 30) which is generally gas impermeable and significantly prevents the exposure of the cotton candy to moisture in the atmosphere to maintain the cotton candy for a period of at least one month.

17. The method of any preceding claim further including displaying the cotton candy within the container (20, 30) for sale for period of at least two weeks.

18. The method of any preceding claim including using a container (20, 30) which limits gas transmission into the static volume at a rate of less than 0.3 grams of moisture per 100 square inches (645.16 cm²) of container area at 73° Fahrenheit (22.78°C) for 365 days.

19. A food product comprising a fluffy wad (10) of cotton candy, a container (20, 30) enclosing the wad (10) of cotton candy within a sealed volume, the container reducing moisture contact with the cotton candy to maintain the freshness of the cotton candy wad, **characterised in that** the container is a rigid, self-supporting container (20, 30), and **in that** the container (20, 30) defines a significantly gas impermeable sealed volume which surrounds the cotton candy wad (10) and the container (20, 30) protects the wad.

20. The food product of Claim 19 wherein the rigid container comprises a container body (20) and a lid (30), the lid forming a significantly gas impermeable seal with the container body.

21. The food product of Claim 19 wherein the rigid container comprises a container body (20) and a lid (30), the lid forming a snap seal with the container body.

22. The food product of Claim 19 wherein the container includes an opening (22) sealed by a reclosable closure (30).

23. The food product of any one of Claims 19 to 22 wherein the container (20, 30) is made of a plastic material.

24. The food product of any one of Claims 19 to 22, wherein the container (20, 30) is formed of polypropylene having a wall thickness in the range of 0.007 to 0.015 inches (0.178 to 0.381 mm).

25. The food product of Claim 24 wherein the container (20, 30) is formed of polypropylene having a wall thickness of approximately 0.011 inches (0.280 mm).

26. The food product of any one of Claims 19 to 25 wherein the container (20, 30) is sufficiently rigid to stackably support another container without compression of the cotton candy wad therein, and further including a stack of a plurality of the containers filled with cotton candy.

27. The food product of any one of Claims 19 to 26 wherein the container (20, 30) is at least partially transparent so the cotton candy may be seen in the container.

28. The food product of any one of Claims 19 to 27 wherein the container (20, 30) is generally cylindrical in shape.

29. The food product of any one of Claim 19 to 28 wherein the container (20, 30) maintains the cotton candy from moisture sufficient to degrade the cotton candy for a period of at least two weeks.

30. The food product of any one of Claims 19 to 29 wherein the container (20, 30) is operable for reducing the exposure of the wad of cotton candy to moisture in the ambient atmosphere to establish a shelf life of the food product of at least one month.

31. The food product of any one of Claims 19 to 30 wherein the container (20, 30) has a gas impermeability which results in the exposure of the cotton candy to less than approximately 0.3 grams of moisture per 100 square inches (645.16 cm²) of container area at 73° Fahrenheit (22.78°C) for 365 days.

## Patentansprüche

1. Verpackungsverfahren für Zuckerwatte, das die Schritte Formen eines flockigen Knäuels (10) aus Zuckerwatte, Positionieren des flockigen Knäuels aus Zuckerwatte in einen Behälter (20, 30) und Abdichten des Behälters (20, 30) um den Knäuel (10) aus Zuckerwatte herum umfasst, wobei der Behälter (20, 30) Feuchtekontakt mit der Zuckerwatte inhibiert, **dadurch gekennzeichnet, dass** der Behälter ein starrer, selbsttragender Behälter (20, 30) ist und, dass der abgedichtete, starre Behälter (20, 30) ein statisches Volumen definiert, das den Zuckerwatteknäuel (10) umgibt und den Knäuel davor schützt sich leicht zusammendrücken und beschädigen zu lassen.

2. Das Verfahren des Anspruchs 1, wobei der Behälter einen Körper (20) mit einer Öffnung (22) einschließt, der flockige Knäuel (10) durch die Öffnung (22) in den Behälterkörper (20) positioniert wird und die Behälterkörperöffnung (22) abgedichtet wird, um den Dichtbehälter (20, 30) zu formen und, wobei das Verfahren weiter das Präsentieren des Knäuels (10) aus Zuckerwatte in den Behälter (20, 30), zum direkten Verzehr durch einen Verbraucher aus dem Behälter, umfasst.

3. Das Verfahren des Anspruchs 2, das weiter den Schritt des Abdichtens der Behälterkörperöffnung (22) mit einem Deckel (30) umfasst, der eine signifikant gasdichte Dichtung mit dem Behälterkörper (20) bereitstellt.

4. Das Verfahren des Anspruchs 2, das weiter den Schritt der Abdichtung der Behälterkörperöffnung (22) mit einem Deckel (30) umfasst, wobei der Deckel eine Schnappdichtung mit dem Behälterkörper (20) formt.

5. Das Verfahren von entweder Anspruch 3 oder Anspruch 4, wobei der Deckel (30) konfiguriert ist, um stapelbar in einen Boden eines weiteren starren Behälters einzurasten und das den Schritt des Stapelns eines der Behälter auf einen anderen einschließt.

6. Das Verfahren des Anspruchs 2, wobei der Abdichtschritt das Anbringen eines wieder schließbaren Verschlusses auf die Öffnung (22) einschließt.

7. Das Verfahren eines beliebigen vorhergehenden Anspruchs, das den Schritt Positionieren des Knäuels aus Zuckerwatte in einen Behälter (20, 30) einschließt, der ausreichend starr ist, um einen weiteren Behälter stapelbar, ohne Zusammendrücken des darin befindlichen Zuckerwatte-knäuels (10), zu tragen.

8. Das Verfahren eines beliebigen vorhergehenden Anspruchs einschließlich Verwendung eines, aus einem Kunststoffmaterial hergestellten, Behälters (20, 30).

9. Das Verfahren eines beliebigen vorhergehenden Anspruchs einschließlich dem Schritt der Verwendung eines Behälters (20, 30) aus Polypropylen mit einer Wandstärke im Bereich 0,007 bis 0,015 Zoll (0,178 bis 0,381 mm).

10. Das Verfahren des Anspruchs 9 einschließlich Verwendung eines Behälters (20, 30) mit einer Wandstärke von ca. 0,011 Zoll (0,280 mm).

11. Das Verfahren eines beliebigen vorhergehenden Anspruchs einschließlich Verwendung eines Behälters (20, 30), der wenigstens teilweise transparent ist, sodass die Zuckerwatte innen im Behälter sichtbar ist.

12. Das Verfahren eines beliebigen vorhergehenden Anspruchs einschließlich Verwendung eines Behälters (20, 30) einer im Allgemeinen zylindrischen Form.

13. Das Verfahren eines beliebigen vorhergehenden Anspruchs einschließlich Positionieren des Knäuels in einen Behälter mit einem im Allgemeinen flachen Boden (24).

14. Das Verfahren eines beliebigen vorhergehenden Anspruchs, das weiter Platzierung von grafischen Darstellungen (29) am Behälter umfasst, um Informationen über den Zuckerwatteknäuel (10) zu vermitteln.

15. Das Verfahren eines beliebigen vorhergehenden Anspruchs einschließlich Verwendung eines Behälters (20, 30), für eine Zeitspanne von wenigstens zwei Wochen, der den Zuckerwatteknäuel (10) ausreichend vor Feuchte bewahrt, die ausreichen würde die Zuckerwatte abzubauen.

16. Das Verfahren eines beliebigen vorhergehenden Anspruchs unter Verwendung eines Behälters (20, 30), der im Allgemeinen gasdicht ist und signifikant verhindert, dass die Zuckerwatte Feuchte in der Atmosphäre ausgesetzt wird, um die Zuckerwatte für eine Zeitspanne von wenigstens einem Monat zu erhalten.

17. Das Verfahren eines beliebigen vorhergehenden Anspruchs, das Ausstellen der Zuckerwatte im Behälter (20, 30) zum Verkauf für eine Zeitspanne von wenigstens zwei Wochen einschließt.

18. Das Verfahren eines beliebigen vorhergehenden Anspruchs einschließlich Verwendung eines Behälters (20, 30), der Gasübertragung in das statische Volumen auf eine Rate von weniger als 0,3 Gramm Feuchte pro 100 Quadratzoll (645,16 cm²) Behälterfläche bei 73° Fahrenheit (22,78°C) für 365 Tage begrenzt.

19. Ein Lebensmittelprodukt, das einen flockigen Knäuel (10) aus Zuckerwatte, einen Behälter (20, 30), der den Knäuel (10) aus Zuckerwatte in ein abgedichtetes Volumen einschließt, umfasst, wobei der Behälter Feuchtekontakt mit der Zuckerwatte reduziert, um die Frische des Zuckerwatteknäuels zu erhalten, **dadurch gekennzeichnet, dass** der Behälter ein starrer, selbsttragender Behälter (20, 30) ist und, dass der Behälter (20, 30) ein signifikant gasdicht abgedichtetes Volumen definiert, das den Zuckerwatteknäuel (10) umgibt und der Behälter (20, 30) den Knäuel schützt.

20. Das Lebensmittelprodukt des Anspruchs 19, wobei der starre Behälter einen Behälterkörper (20) und einen Deckel (30) umfasst, wobei der Deckel eine signifikant gasdichte Dichtung mit dem Behälterkörper formt.

21. Das Lebensmittelprodukt des Anspruchs 19, wobei der starre Behälter einen Behälterkörper (20) und einen Deckel (30) umfasst und der Deckel eine Schnappdichtung mit dem Behälterkörper formt.

22. Das Lebensmittelprodukt des Anspruchs 19, wobei der Behälter eine, durch einen wieder schließbaren Verschluss (30) abgedichtete, Öffnung (22) einschließt.

23. Das Lebensmittelprodukt eines beliebigen der Ansprüche 19 bis 22, wobei der Behälter (20, 30) aus einem Kunststoffmaterial hergestellt ist.

24. Das Verfahren eines beliebigen der vorhergehenden Ansprüche, wobei der Behälter (20, 30) aus Polypropylen mit einer Wandstärke im Bereich 0,007 bis 0,015 Zoll (0,178 bis 0,381 mm) geformt ist.

25. Das Lebensmittelprodukt des Anspruchs 24, wobei der Behälter (20, 30) aus Polypropylen mit einer Wandstärke von ca. 0,011 Zoll (0,280 mm) geformt ist.

26. Das Lebensmittelprodukt eines beliebigen der Ansprüche 19 bis 25, wobei der Behälter (20, 30) ausreichend starr ist, um einen weiteren Behälter, ohne Zusammendrücken des darin befindlichen Zuckerwatte-knäuels, stapelbar zu tragen und weiter einen Stapel einer Vielheit der mit Zuckerwatte gefüllten Behälter einschließt.

27. Das Lebensmittelprodukt eines beliebigen der Ansprüche 19 bis 26, wobei der Behälter (20, 30) wenigstens teilweise transparent ist, sodass die Zuckerwatte im Behälter sichtbar ist.

28. Das Lebensmittelprodukt eines beliebigen der Ansprüche 19 bis 27, wobei der Behälter (20, 30) im Allgemeinen zylindrischer Gestalt ist.

29. Das Lebensmittelprodukt eines beliebigen der Ansprüche 19 bis 23, wobei der Behälter (20, 30), für eine Zeitspanne von wenigstens zwei Wochen, die Zuckerwatte vor Feuchte bewahrt, die ausreichen würde die Zuckerwatte abzubauen.

30. Das Lebensmittelprodukt eines beliebigen der Ansprüche 19 bis 29, wobei der Behälter (20, 30) funktionsfähig ist, Aussetzung des Zuckerwatteknäuels gegenüber Feuchte in der umgebenden Atmosphäre zu reduzieren, um eine Haltbarkeit des Lebensmittelprodukts von wenigstens einem Monat zu schaffen.

31. Das Lebensmittelprodukt eines beliebigen der Ansprüche 19 bis 30, wobei der Behälter (20, 30) eine Gasundurchlässigkeit aufweist, die dazu führt, dass die Zuckerwatte weniger als ca. 0,3 Gramm Feuchte pro 100 Quadratzoll (645,16 cm²) Behälterfläche bei 73° Fahrenheit (22,78°C), für 365 Tage, ausgesetzt ist.

## Revendications

1. Procédé de conditionnement de barbe à papa comportant la formation d'une boule duveteuse (10) de barbe à papa, la mise en place de la boule duveteuse de barbe à papa dans un contenant (20, 30) et la fermeture hermétique du contenant (20, 30) autour de la boule (10) de barbe à papa, le contenant (20, 30) empêchant toute humidité d'entrer en contact avec la barbe à papa, **caractérisé en ce que** le contenant est un contenant rigide, autoporteur (20, 30), et **en ce que** le contenant rigide fermé hermétiquement (20, 30) définit un volume statique qui entoure la boule (10) de barbe à papa et protège la boule qui risquerait autrement de se comprimer et de se détériorer facilement.

2. Procédé selon la revendication 1, dans lequel le contenant comprend un corps (20) avec une ouverture (22), la boule duveteuse (10) de barbe à papa est mise en place dans le corps (20) du contenant au travers de l'ouverture (22) et l'ouverture (22) du corps du contenant est fermée hermétiquement pour former le contenant hermétique (20, 30), et dans lequel le procédé comporte par ailleurs la présentation de la boule (10) de barbe à papa dans le contenant (20, 30), barbe à papa que le consommateur consomme directement dans le contenant.

3. Procédé selon la revendication 2, comportant par ailleurs l'étape de fermeture hermétique de l'ouverture (22) du corps du contenant à l'aide d'un couvercle (30), afin de procurer une fermeture hermétique dans une large mesure imperméable aux gaz avec le corps (20) du contenant.

4. Procédé selon la revendication 2, comportant par ailleurs l'étape de fermeture hermétique de l'ouverture (22) du corps du contenant à l'aide d'un couvercle (30), le couvercle formant une fermeture hermétique de type clipsage avec le corps (20) du contenant.

5. Procédé selon l'une quelconque des revendications 3 ou 4, dans lequel le couvercle (30) est configuré pour engager de manière empilable un fond d'un autre contenant rigide et comprenant l'étape d'empilage d'un des contenants sur un autre.

6. Procédé selon la revendication 2, dans lequel l'étape de fermeture hermétique comprend l'application d'un opercule refermable (30) sur l'ouverture (22).

7. Procédé selon l'une quelconque des revendications précédentes, comprenant l'étape de mise en place de la boule de barbe à papa dans un contenant (20, 30) qui est suffisamment rigide pour supporter de manière empilable un autre contenant sans compression de la boule (10) de barbe à papa s'y trouvant.

8. Procédé selon l'une quelconque des revendications précédentes, comprenant l'utilisation d'un contenant (20, 30) réalisé à partir d'une matière plastique.

9. Procédé selon l'une quelconque des revendications précédentes, comprenant l'étape de l'utilisation d'un contenant (20, 30) de polypropylène ayant une épaisseur de paroi de l'ordre de 0,178 mm à 0,381 mm.

10. Procédé selon la revendication 9, comprenant l'utilisation d'un contenant (20, 30) ayant une épaisseur de paroi de 0,280 mm approximativement.

11. Procédé selon l'une quelconque des revendications précédentes, comprenant l'utilisation d'un contenant (20, 30) qui est au moins partiellement transparent de telle manière que la barbe à papa peut être vue à l'intérieur du contenant.

12. Procédé selon l'une quelconque des revendications précédentes, comprenant l'utilisation d'un contenant (20, 30) ayant une forme généralement cylindrique.

13. Procédé selon l'une quelconque des revendications précédentes, comprenant la mise en place de la boule dans un contenant ayant un fond (24) généralement plat.

14. Procédé selon l'une quelconque des revendications précédentes, comportant par ailleurs la pose de graphiques (29) sur le contenant en vue de communiquer des informations se rapportant à la boule (10) de barbe à papa.

15. Procédé selon l'une quelconque des revendications précédentes, comprenant l'utilisation d'un contenant (20, 30) qui conserve la boule (10) de barbe à papa pendant une période de deux semaines au moins contre toute humidité qui suffirait pour dégrader la barbe à papa.

16. Procédé selon l'une quelconque des revendications précédentes, comprenant l'utilisation d'un contenant (20, 30) qui est généralement imperméable aux gaz et qui empêche dans une large mesure toute exposition de la barbe à papa à toute humidité présente dans l'atmosphère pour conserver la barbe à papa pendant une période de un mois au moins.

17. Procédé selon l'une quelconque des revendications précédentes, comprenant par ailleurs la mise en rayon de la barbe à papa à l'intérieur du contenant (20, 30) pour une mise en vente pendant une période de deux semaines au moins.

18. Procédé selon l'une quelconque des revendications précédentes, comprenant l'utilisation d'un contenant (20, 30) qui limite toute transmission de gaz dans le volume statique à une vitesse inférieure à 0,3 grammes d'humidité par 645,16 cm² de surface du contenant à 22,78°C pendant 365 jours.

19. Produit alimentaire comportant une boule duveteuse (10) de barbe à papa, un contenant (20, 30) renfermant la boule (10) de barbe à papa à l'intérieur d'un volume fermé hermétiquement, le contenant réduisant tout contact entre toute humidité et la barbe à papa afin de conserver la fraîcheur de la boule de barbe à papa, **caractérisé en ce que** le contenant est un contenant rigide, autoporteur (20, 30), et **en ce que** le contenant (20, 30) définit un volume fermé hermétiquement dans une large mesure imperméable aux gaz qui entoure la boule (10) de barbe à papa et le contenant (20, 30) protège la boule.

20. Produit alimentaire selon la revendication 19, dans lequel le contenant rigide comporte un corps (20) de contenant et un couvercle (30), le couvercle formant une fermeture hermétique dans une large mesure imperméable aux gaz avec le corps du contenant.

21. Produit alimentaire selon la revendication 19, dans lequel le contenant rigide comporte un corps (20) de contenant et un couvercle (30), le couvercle formant une fermeture hermétique de type clipsage avec le corps du contenant.

22. Produit alimentaire selon la revendication 19, dans lequel le contenant comprend une ouverture (22) fermée hermétiquement par un opercule refermable (30).

23. Produit alimentaire selon l'une quelconque des revendications 19 à 22, dans lequel le contenant (20, 30) est réalisé à partir d'une matière plastique.

24. Produit alimentaire selon l'une quelconque des revendications 19 à 22, dans lequel le contenant (20, 30) est réalisé à partir de polypropylène ayant une épaisseur de paroi de l'ordre de 0,178 mm à 0,381 mm.

25. Produit alimentaire selon la revendication 24, dans lequel le contenant (20, 30) est réalisé à partir de polypropylène ayant une épaisseur de paroi de 0,280 mm approximativement.

26. Produit alimentaire selon l'une quelconque des revendications 19 à 25, dans lequel le contenant (20, 30) est suffisamment rigide pour supporter de manière empilable un autre contenant sans compression de la barbe à papa s'y trouvant, et comprenant par ailleurs une pile d'une pluralité de contenants remplis de barbe à papa.

27. Produit alimentaire selon l'une quelconque des revendications 19 à 26, dans lequel le contenant (20, 30) est au moins partiellement transparent de telle manière que la barbe à papa peut être vue à l'intérieur du contenant.

28. Produit alimentaire selon l'une quelconque des revendications 19 à 27, dans lequel le contenant (20, 30) est de forme généralement cylindrique.

29. Produit alimentaire selon l'une quelconque des revendications 19 à 28, dans lequel le contenant (20, 30) conserve la barbe à papa pendant une période de deux semaines au moins contre toute humidité qui suffirait pour dégrader la barbe à papa.

30. Produit alimentaire selon l'une quelconque des revendications 19 à 29, dans lequel le contenant (20, 30) est utilisable pour réduire tout exposition de la boule de barbe à papa à toute humidité présente dans l'atmosphère ambiante pour établir une durée de conservation du produit alimentaire de un mois au moins.

31. Produit alimentaire selon l'une quelconque des revendications 19 à 30, dans lequel le contenant (20, 30) présente une imperméabilité aux gaz qui entraîne l'exposition de la barbe à papa à moins de 0,3 grammes d'humidité approximativement par 645,16 cm² de surface du contenant à 22,78°C pendant 365 jours.
